# EUROPÄISCHE PATENTSCHRIFT

(11) **EP 1 869 345 B1**
(45) Veröffentlichungstag und Bekanntmachung des Hinweises auf die Patenterteilung: **07.01.2009**
(21) Anmeldenummer: 06723491.4
(22) Anmeldetag: 17.03.2006
(51) Int. Cl.: F16H 53/02

(54) **MEHRTEILIGER MULTIFUNKTIONSNOCKEN**
MULTI-PART MULTI-FUNCTION CAM
CAME MULTIFONCTION CONSTITUEE DE PLUSIEURS PARTIES

(30) Priorität: 07.04.2005 DE 102005016201
(43) Veröffentlichungstag der Anmeldung: 26.12.2007
(73) Patentinhaber: ThyssenKrupp Presta TecCenter AG, 9492 Eschen (LI)
(72) Erfinder: HÄUSLE, Erwin, G., A-6710 Nenzing (AT)
(74) Vertreter: Adams, Steffen
(86) Internationale Anmeldenummer: PCT/EP2006/002447
(87) Internationale Veröffentlichungsnummer: WO 2006/105858

(56) Entgegenhaltungen:
- DE-A1- 3 232 868
- US-A- 5 836 215
- US-A1- 2004 237 706
- PATENT ABSTRACTS OF JAPAN Bd. 010, Nr. 323 (M-531), 5. November 1986 (1986-11-05) & JP 61 129291 A (TOYO SEIKOU KK), 17. Juni 1986 (1986-06-17)
- PATENT ABSTRACTS OF JAPAN Bd. 012, Nr. 052 (M-668), 17. Februar 1988 (1988-02-17) & JP 62 199907 A (MAZDA MOTOR CORP), 3. September 1987 (1987-09-03)

## Beschreibung

Die Erfindung betrifft Nocken mit Mehrfachfunktionen für gebaute Nockenwellen.

Gebaute Nockenwellen sind Nockenwellen, bei denen separat gefertigte Nocken und im Bedarfsfall weitere Funktionselemente, wie nichtabschließende Antriebsräder, Sensorringe, Lagerringe mit einer Tragwelle, verbunden werden, um die Nockenwelle zu bilden.

Die Nocken stehen mit ihrer Umfangsaußenkontur in direktem Kontakt mit einem Nockenfolger, beispielsweise einem Tassenstößel oder einem Rollenschlepphebel, der auf diese Weise bei Drehung der Welle in eine Bewegung versetzt wird. Derartige Nockenwellen werden zur Steuerung der Gaswechselventile von Verbrennungsmotoren eingesetzt. Weiter werden Nockenwellen auch zur Ansteuerung von Verstellelementen variabler Ventilsteuerungssysteme für die Steuerung der Gaswechselventile in Verbrennungsmotoren eingesetzt. Im letzteren Fall werden diese Wellen häufig als Exzenterwellen bezeichnet. Dabei können die Nocken tatsächlich als Exzenter, aber auch als Kurvenscheiben mit speziellen Kurvenkonturen, ausgebildet sein. Gerade in diesem letzteren Fall werden die Nockenwellen häufig nur hin und her und nicht umlaufend um die eigene Achse gedreht.

Im Zuge der technischen Weiterentwicklung der Motorentechnik übernimmt die Nockenwelle zusätzlich zur Steuerung der Gassteuerventile weitere Funktionen. So werden in vielen Fällen von der Nockenwelle zusätzlich zu den angesteuerten Gassteuerventilen Vakuumpumpen angetrieben und insbesondere Pumpenelemente von Pumpe-Düse-Elementen durch so genannte Pumpennocken angesteuert. Derartige Pumpe-Düse-Elemente werden zur Kraftstoffdirekteinspritzung, wie sie bei modernen Dieselmotoren bekannt ist, angewendet. Hier ist der Nockenfolger das Antriebselement des Pumpe-Düse-Elementes.

Diese verschiedenen Funktionalitäten bedingen sehr unterschiedliche Anforderungen an die Werkstoffeigenschaften und Festigkeit der die jeweiligen Funktionen erfüllenden Bereiche bzw. Funktionselemente der Nockenwelle. So sind für Nocken, die Tassenstößel antreiben, besonders gute Gleiteigenschaften wichtig. Nocken, die jedoch Rollenschlepphebel oder Pumpenelemente antreiben, müssen besonders hohen Hertzschen Flächenpressungen standhalten. Abtriebe für Vakuumpumpen benötigen wiederum ausreichende Härte und Zähigkeit, damit der Formschluss sich durch die Belastung nicht ausschlägt oder ausleiert und das Drehmoment dauerfest übertragen werden kann.

Im Stand der Technik werden zur Lösung daher immer häufiger gebaute Nockenwellen eingesetzt, bei denen jede Funktionalität durch eigene Funktionselemente gewährleistet wird, die aus speziell abgestimmten Werkstoffen mit entsprechenden Wärmebehandlungen hergestellt wurden. So werden auf die Tragwelle spezielle Pumpennocken aufgebracht und spezielle Endstücke an ein Ende der Tragwelle angebracht, die den Formschluss für den Antrieb der Vakuumpumpe realisieren.

Derartige Lösungen besitzen aber eine Reihe von Nachteilen. Zunächst ist die Montage der vielen einzelnen Komponenten, deren Lage zueinander genau ausgerichtet sein muss, aufwändig. Weiter benötigt jedes der Funktionselemente Bauraum. Insbesondere müssen der Antrieb für die Vakuumpumpe und der unmittelbar dazu benachbarte Nocken voneinander axial beabstandet sein.

Ein Beispiel für eine gebaute Nockenwelle mit Nocken, die aus zwei miteinander verbundenen Nockenelementen bestehen, ist aus der DE 32 32 868 A1 bekannt. DE 32 32868 A1 wird als gattungsbildender. Stand der Technik angesehen. Ausgangspunkt für die der DE 32 32 868 A1 zugrunde liegende Erfindung waren gebaute Nockenwellen mit einem Tragrohr aus Stahl und einstückigen Nocken aus einem Sintermetall. Um die bezüglich dieser gebauten Nockenwellen bekannten Fertigungsschwierigkeiten zu vermeiden, werden in der DE 32 32 868 A1 aus zwei Teilen gefertigte Nocken vorgeschlagen. Die aus dieser Druckschrift bekannten Nocken weisen ein Außenteil aus Sintermaterial und ein mit diesem verbundenes Kernteil aus nicht gesintertem Metall, insbesondere Stahl auf. Das das Nockenäußere bildende Außenteil aus Sintermetall ist mit dem Kernteil durch Sintern verbunden.

Aufgabe der vorliegenden Erfindung ist es bei einer Nockenwelle, die, wie voranstehend beschrieben, mehrere unterschiedliche Funktionen erfüllen soll, die Anzahl der bei der Montage der Nockenwelle zu montierenden Komponenten zu verringern und den Bedarf an Bauraum auch bei Integration weiterer Funktionen in die Nockenwelle zu begrenzen. Insbesondere soll der axiale Abstand zwischen einem Antrieb für ein Hilfsaggregat, das von der Nockenwelle angetrieben wird, und der Nockenkontur des unmittelbar benachbarten Nockens beliebig verkleinert werden können.

Diese Aufgabe wird gelöst durch einen Nocken mit den Merkmalen des Patentanspruchs 1. Vorteilhafte Weiterbildungen sind in den Unteransprüchen angegeben. Eine Nockenwelle bei der mindestens ein Nocken nach Anspruchs 1 ausgebildet ist, ist in Anspruch 5 beansprucht.

Nachfolgend wird die Erfindung anhand einer Zeichnung näher erläutert. Die
- Figuren 1, 2 und 3: zeigen schematisch die Einzelkomponenten, aus denen Ausführungsformen des Nockens gebildet sind,
- Figur 4: veranschaulicht schematisch den Zusammenbau einer Ausführungsform des Nockens,
- Figur 5: zeigt eine Ausführungsform des Nockens,
- Figur 6: zeigt ein schematisches Beispiel für eine Nockenwelle.

Die voranstehend genannte Aufgabe wird bei einem Nocken mit den Merkmalen gemäß dem Oberbegriff des Patentanspruchs 1 dadurch gelöst, dass das Nockenkonturteil 2 aus einem Werkstoff besteht, dessen Werkstoffeigenschaften den besonderen Anforderungen der Beanspruchungen aus der Betätigung des Nockenfolgers standhält und dass das Nockenbauteil als Zusatzfunktionsteil 3 ausgebildet ist, welches mindestens eine weitere Funktionsfläche 5 besitzt, die zur Erfüllung einer zusätzlichen Nockenfunktion vorgesehen ist, wobei das Zusatzfunktionsteil 3 aus einem Werkstoff besteht, dessen Werkstoffeigenschaften den besonderen Anforderungen der Beanspruchungen standhält, die aus der Erfüllung der zusätzlichen Nockenfunktion resultieren.

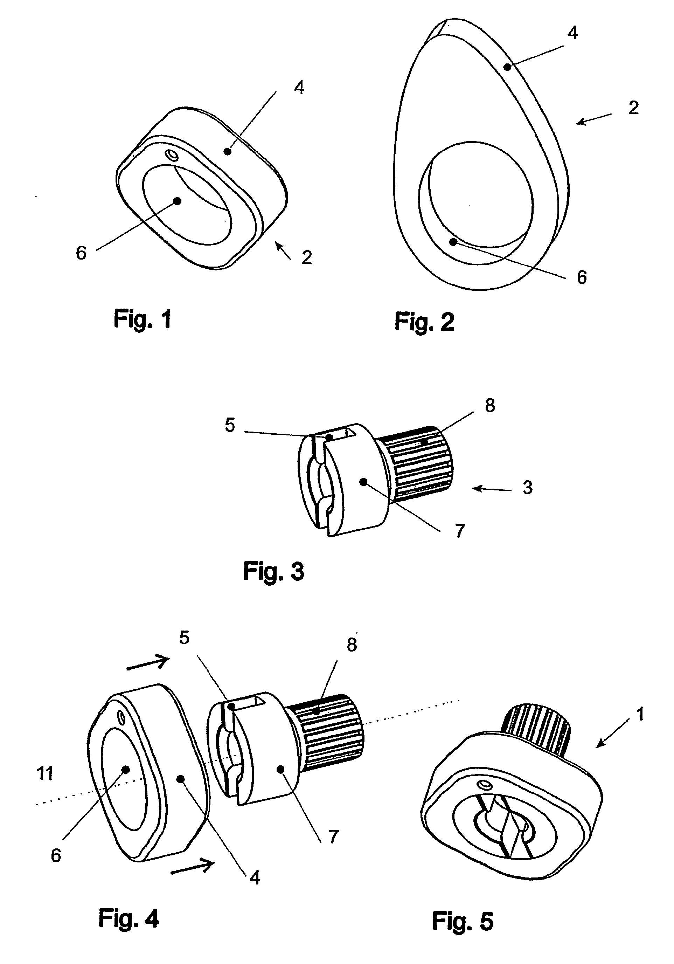

Die erste Funktion des so gebildeten Nockens 1 besteht in dem Antrieb des Nockenfolgers. Das in der Figur 1 schematisch gezeigte Nockenkonturteil 2 zeigt als Beispiel eine Nockenumfangskontur 4 für einen Pumpennocken (wie den in Fig. 5 dargestellten für einen Nocken 1), der für das Antreiben eines oben bereits erwähnten Pumpe-Düse-Antriebselements als Nockenfolger vorgesehen ist.

Das in Figur 2 schematisch gezeigte Nockenkonturteil 2, welches eine andere Ausführungsform wiedergibt als die in Fig. 1 dargestellte, zeigt als Beispiel eine Nockenumfangskontur 4 für einen Nocken 1, der zum Antrieb eines ein Gaswechselventil antreibenden Abtriebsglieds als Nockenfolger verwendet wird.

Als weitere Funktion ist insbesondere ein Antrieb einer Pumpe, beispielsweise einer Vakuumpumpe, zu sehen, bei der der erfindungsgemäß gebildete Nocken über einen Formschluss in ein Pumpenantriebsglied eingreift. In der Figur 3 ist ein schematisches Beispiel für die Funktionsfläche 5 zum Antrieb eines Pumpenantriebs gezeigt. Diese Funktionsfläche 5 ist am Zusatzfunktionsteil 3 angeordnet. Um den so gebildeten Nocken beim Zusammenbau der Nockenwelle mit der Tragwelle zu verbinden, wird der Nocken in das Ende des Rohrschaftes des Tragrohrs innen eingepresst oder an das Ende des Wellenschaftes des Tragrohrs angeschweisst.

Das Nockenkonturteil 2 und das Zusatzfunktionsteil 3 werden jeweils als separate Einzelteile hergestellt und anschliessend mittels Aufpressen, Aufschrumpfen, Verlöten und/oder Verschweissen miteinander verbunden. Dabei ist darauf zu achten, dass die Werkstoffeigenschaften der Einzelkomponenten durch den Fügeprozess nicht negativ beeinflusst werden. So dürfen beim thermischen Fügen die Härtezonen nicht über die Rekristallisationstemperatur erwärmt werden.

Besonders zu bevorzugen ist daher das Fügen mittels Aufpressen, das zudem auch wesentlich kostengünstiger ist. Zur Verringerung der Fügespannung wird eine Gravur, wie sie mittels Rändelung oder Rollierung entsteht, auf die Fügekontur einer der beiden zu fügenden Komponenten aufgebracht. Auf die Fügekontur der anderen zu fügenden Komponente wird bevorzugt ebenfalls eine Gravur eingebracht. Beide Konturen sind insoweit korrespondierend ausgeführt, dass eine kraft- und formschlüssige Verbindung beim Aufpressen erzeugt wird. Ein Beispiel für eine derartige Verbindung ist in der DE 41 21 951 C1 beschrieben. Die jeweilige Gravur wird in die Fügekonturen bevorzugt während des Herstellprozesses der Einzelkomponenten erzeugt.

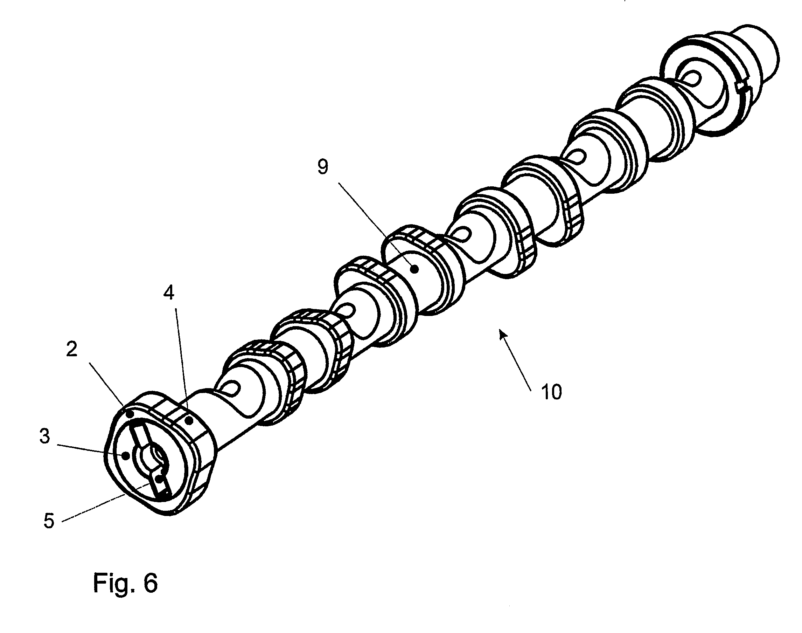

Im in den Figuren dargestellten Ausführungsbeispiel ist das Zusatzfunktionsteil 3 ein Stopfen, der an seinem einen Ende mit seiner Funktionsfläche 5 in das (hier nicht dargestellte) Antriebsglied einer (ebenfalls nicht dargestellten) Vakuumpumpe eingreift und dessen anderes Ende mit seiner zweiten Fügekontur 8 als Rohrstopfen zum Verschliessen des Endes der rohrförmigen Tragwelle der Nockenwelle ausgebildet ist. Die Einbausituation dieses Nockens ist in Fig. 6 an dem vorderen Ende der dort gezeigten zusammengebauten Nockenwelle dargestellt. Der Nocken 1 übernimmt die Funktion eines Pumpennockens und seine Nockenumfangskontur 4 ist entsprechend ausgebildet.

Das Zusatzfunktionsteil 3 ist aus Sinterwerkstoff, beispielsweise SintD11, hergestellt und anschliessend gehärtet und angelassen. Dadurch kann die komplexe Geometrie zur Ausbildung der Funktionsfläche 5 unmittelbar ohne Nacharbeit erzeugt werden, wodurch der Herstellungsaufwand und die Kosten reduziert werden. Die beim Härten entstehenden Verzüge werden durch Vorhalten entsprechender Maßabweichungen auf ein Minimum reduziert.

Das Nockenkonturteil 2 ist aus einem hochfesten Kugellagerstahl, beispielsweise 100Cr6, hergestellt. Derartige Teile werden bevorzugt warm geschmiedet. Um die hohen Festigkeiten und Härten zu erreichen, wird das Nockenkonturteil gehärtet und angelassen. Dabei ist ein großer Vorteil, dass sowohl ein induktives Randschichthärten als auch ein Durchhärten als Schüttgut angewendet werden kann. Alternativ kann auch ein Stahl, wie 16MnCr5 oder ein anderer spezieller hochfester und gut umformbarer Stahl Verwendung finden.

Nach der separaten Herstellung der beiden Einzelkomponenten werden diese miteinander verbunden. Im ausgeführten Beispiel erfolgt der Verbund durch Aufpressen des Nockenkonturteils 2 auf das Zusatzfunktionsteil 3, wobei durch die zuvor auf den Fügekonturen 6 und 7 aufgebrachten Gravuren ein Kraft- und Formschluss erzielt wird. In der Figur 4 ist dieser Aufpressvorgang durch die Pfeile versinnbildlicht. Dabei werden die Einzelkomponenten entlang der Nockenachse 11 ausgerichtet.

Der so hergestellte Nocken 1 wird anschliessend mit der Tragwelle 9 verbunden. Dabei wird im ausgeführten Beispiel der Nocken mit seiner zweiten Fügekontur 8 in die rohrförmige Tragwelle 9 eingepresst.

Es ist alternativ zu der in den Fig. 3 bis 5 dargestellten Ausführungsform auch möglich, die zweite Fügekontur 8 als innere Ausnehmung des Zusatzfunktionsteils 3 auszubilden und den Nocken 1 über die Tragwelle 9 zu schieben. Das ist beispielsweise dann erforderlich, wenn als Tragwelle 9 kein Rohr, sondern ein Stabmaterial Verwendung findet. Selbstverständlich kann ein derartig ausgebildeter Nocken jedoch auch auf eine hohle Tragwelle 9 aufgeschoben werden.

Weiter ist es nahe liegend, einen Nocken aus mehreren Einzelkomponenten zu bilden, wenn mehr als zwei Funktionen in den Nocken integriert werden sollen.

### Liste der Bezeichnungen

- 1: Nocken
- 2: Nockenkonturteil
- 3: Zusatzfunktionsteil
- 4: Nockenumfangskontur
- 5: Funktionsfläche
- 6: Fügekontur
- 7: Fügekontur
- 8: zweite Fügekontur
- 9: Tragwelle
- 10: Gebaute Nockenwelle
- 11: Nockenachse

## Patentansprüche

1. Nocken (1), gebildet aus mindestens zwei separat hergestellten Einzelkomponenten aus unterschiedlichen Werkstoffen und/oder mit unterschiedlichen Werkstoffeigenschaften, wobei eine der Einzelkomponenten als ein eine Nockenumfangskontur (4) für die Betätigung eines Nockenfolgers aufweisendes Nockenkonturteil (2) und eine andere Einzelkomponente als ein mit dem Nockenkonturteil (2) fest verbundenes Nockenbauteil (3) ausgebildet ist, und wobei das Nockenkonturteil (2) aus einem Werkstoff besteht, dessen Werkstoffeigenschaften den besonderen Anforderungen der Beanspruchungen aus der Bestätigung des Nockenfolgers standhält, **dadurch gekennzeichnet, dass** das Nockenbauteil als Zusatzfunktionsteil (3) ausgebildet ist, welches mindestens eine weitere Funktionsfläche (5) besitzt, die zur Erfüllung einer zusätzlichen Nockenfunktion vorgesehen ist, wobei das Zusatzfunktionsteil (3) aus einem Werkstoff besteht, dessen Werkstoffeigenschaften den besonderen Anforderungen der Beanspruchungen standhält, die aus der Erfüllung der zusätzlichen Nockenfunktion resultieren, wobei die an dem Zusatzfunktionsteil (3) ausgebildete weitere Funktionsfläche (5) zur Übertragung eines Drehmomentes auf ein Antriebsglied, insbesondere auf den Antrieb einer Pumpe, ausgebildet ist.

2. Nocken nach Anspruch 1, **dadurch gekennzeichnet, dass** das Nockenkonturteil (2) eine Nockenumfangskontur (4) aufweist, mit der ein als Antriebsglied für ein Pumpe-Düse-Element ausgebildeter Nockenfolger antreibbar ist.

3. Nocken nach Anspruch 1 oder 2, **dadurch gekennzeichnet, dass** die weitere Funktionsfläche (5) als sich im Wesentlichen in radialer Richtung erstreckende Schubfläche ausgebildet ist, die im Einbauzustand mit einer entsprechenden Fläche des Antriebsgliedes zusammenwirkt.

4. Nocken nach einem der 1 bis 3, **dadurch gekennzeichnet, dass** das Nockenkonturteil (2) dessen äußere Nockenumfangskontur (4) für die Betätigung eines Nockenfolgers vorgesehen ist, aus geschmiedetem Stahl und das Zusatzfunktionsteil (3), das die weitere Funktionsfläche (5) aufweist, aus Sinterwerkstoff gebildet ist.

5. Nockenwelle, **dadurch gekennzeichnet, dass** sie mindestens einen Nocken, der nach einem der vorangehenden Ansprüche ausgebildet ist, aufweist.

## Claims

1. Cam (1), formed from at least two separately produced individual components consisting of different materials and/or having different material properties, wherein one of the individual components is formed as a cam contour part (2), which comprises a peripheral cam contour (4) for the purpose of actuating a cam follower, and another individual component is formed as a cam component (3) which is fixedly connected to the cam contour part (2), and wherein the cam contour part (2) consists of a material whose material properties meet the specific requirements of the stresses arising from the actuation of the cam follower, **characterised in that** the cam component is formed as a supplementary functional part (3) which comprises at least one further functional surface (5) which is provided in order to fulfil an additional cam function, wherein the supplementary functional part (3) consists of a material whose material properties meet the specific requirements of the stresses which result from the completion of the additional cam function, wherein the further functional surface (5) which is formed on the supplementary functional part (3) is formed for the purpose of transmitting a turning moment to a drive member, in particular to the drive of a pump.

2. Cam as claimed in claim 1, **characterised in that** the cam contour part (2) comprises a peripheral cam contour (4), with which a cam follower formed as a drive member for a pump-nozzle unit can be driven.

3. Cam as claimed in claim 1 or 2, **characterised in that** the further functional surface (5) is formed as a thrust surface which extends substantially in a radial direction and which in the mounted state cooperates with a corresponding surface of the drive member.

4. Cam as claimed in any one of [claims] 1 to 3, **characterised in that** the cam contour part (2) whose outer peripheral cam contour (4) is provided for the actuation of a cam follower is formed from forged steel, and the supplementary functional part (3) which comprises the further functional surface (5) is formed from sintered material.

5. Cam shaft, **characterised in that** it comprises at least one cam which is formed in accordance with any one of the preceding claims.

## Revendications

1. Came (1), formée par au moins deux composants individuels, fabriqués séparément avec des matériaux différents et / ou possédant différentes propriétés propres aux matières, l'un des composants individuels étant réalisé sous la forme d'un composant à contour de came (2), qui présente un contour périphérique de came (4) pour l'actionnement d'un suiveur de came, et l'autre composant individuel étant réalisé en tant que composant de came (3) qui est relié fixement au composant à contour de came (2), et le composant à contour de came (2) étant réalisé avec un matériau dont les propriétés propres à la matière résistent aux conditions particulières des sollicitations qui sont dues à l'actionnement du suiveur de came, **caractérisée en ce que** le composant de came est réalisé en tant que pièce fonctionnelle supplémentaire (3), qui possède au moins une autre surface fonctionnelle (5), qui est prévue pour remplir une fonction de came supplémentaire, la pièce fonctionnelle supplémentaire (3) consistant en un matériau, dont les propriétés propres à la matière résistent aux conditions particulières des sollicitations qui résultent de la mise en oeuvre de la fonction de came supplémentaire, la surface fonctionnelle (5), formée sur le composant de came (3), étant conçue pour la transmission d'un couple de rotation à un organe de commande, en particulier à la commande d'une pompe.

2. Came selon la revendication 1, **caractérisée en ce que** le composant à contour de came (2) présente un contour périphérique de came (4) avec lequel peut être entraîné un suiveur de came, conçu sous la forme d'un organe de commande pour un élément pompe-buse.

3. Came selon revendication 1 ou 2, **caractérisée en ce que** l'autre surface fonctionnelle (5) est conçue en tant que surface de poussée s'étendant essentiellement dans la direction radiale, laquelle coopère, à l'état incorporé, avec une surface correspondante de l'organe de commande.

4. Came selon l'une des revendications 1 à 3, **caractérisée en ce que** le composant à contour de came (2), dont le contour périphérique de came (4) est prévu pour l'actionnement d'un suiveur de came, est réalisé en acier forgé, et que la pièce fonctionnelle supplémentaire (3), qui présente l'autre surface fonctionnelle (5), est exécutée en matière frittée.

5. Arbre à cames, **caractérisé en ce qu'**il présente au moins une came, qui est réalisée selon l'une des revendications précédentes.
